# EUROPÄISCHE PATENTSCHRIFT

(11) **EP 2 306 157 B1**
(45) Veröffentlichungstag und Bekanntmachung des Hinweises auf die Patenterteilung: **06.09.2017**
(21) Anmeldenummer: 10163232.1
(22) Anmeldetag: 19.05.2010
(51) Int. Cl.: G01D 5/347

(54) **Längenmesseinrichtung**
Length measuring device
Dispositif de mesure de longueur

(30) Priorität: 29.09.2009 DE 102009043293
(43) Veröffentlichungstag der Anmeldung: 06.04.2011
(73) Patentinhaber: Dr. Johannes Heidenhain GmbH, 83301 Traunreut (DE)
(72) Erfinder: Schenk, Oliver, 83349 Palling (DE); Reith, Andreas, 94327 Bogen (DE)

(56) Entgegenhaltungen:
- DE-A1- 19 746 532
- DE-U1- 29 624 420

## Beschreibung

Die Erfindung betrifft eine Längenmesseinrichtung nach dem Oberbegriff des Anspruchs 1.

Eine derartige Längenmesseinrichtung ist in der DE 197 46 532 A1 beschrieben. Diese Längenmesseinrichtungen dienen zur Messung von Längen sowie Wegen und werden insbesondere bei Bearbeitungsmaschinen zur Messung der Relativbewegung eines Werkzeugs bezüglich eines zu bearbeitenden Werkstücks, bei Koordinatenmessmaschinen und vermehrt auch in der Halbleiterindustrie eingesetzt.

Diese bekannte Längenmesseinrichtung besteht aus einem Gehäuse, das den Maßstab vor Umwelteinflüssen schützt. Das Gehäuse weist hierzu ein langgestrecktes rohrförmiges Profil auf, dessen stirnseitige Enden jeweils mit einem Deckel abgeschlossen sind. An zumindest einem dieser Deckel ist eine federnde Blechzunge angeschraubt, die den Maßstab federnd kontaktiert und somit eine elektrische Verbindung zwischen der Messteilung des Maßstabs und dem Deckel herstellt.

Diese Blechzunge ist ein diffiziles Teil, dessen Herstellung und Montage relativ aufwendig ist.

Der Erfindung liegt daher die Aufgabe zugrunde eine störsichere Längenmesseinrichtung anzugeben, die einfach aufgebaut ist und einfach zu montieren ist.

Diese Aufgabe wird erfindungsgemäß durch die Merkmale des Anspruchs 1 gelöst.

In den abhängigen Ansprüchen sind vorteilhafte Ausgestaltungen der Erfindung angegeben.

Gemäß der Erfindung weist die Längenmesseinrichtung ein Gehäuse auf, das aus einem langgestreckten Hohlprofil und zumindest einem stirnseitig daran angeordneten Deckel besteht. Im Innenraum des Hohlprofils ist ein Maßstab angeordnet, der eine Messteilung aufweist, welche zur Positionsmessung von einer in Messrichtung relativ zum Gehäuse bewegbaren Abtasteinrichtung abtastbar ist. Auf einer Oberfläche des Maßstabs und entlang des Maßstabs verlaufend ist ein Ableitelement vorgesehen, welches elektrische Ladungen, die sich an der Oberfläche ansammeln, ableitet. Ein elektrisch leitendes Verbindungselement stellt einen elektrischen Kontakt zwischen diesem Ableitelement des Maßstabs und zumindest einem der Gehäuseteile Hohlprofil und Deckel her. Dieses elektrisch leitende Verbindungselement ist Bestandteil einer Dichtung, welche zwischen dem Hohlprofil und dem Deckel dichtend eingesetzt ist. Diese erfindungsgemäß ausgeführte elektrische Ableitung ist zumindest an einem stirnseitigen Ende des Hohlprofils realisiert. In vorteilhafter Weise erfolgt die Ausführung aber an beiden stirnseitigen Enden.

Besonders vorteilhaft ist, wenn das Verbindungselement aus einem elektrisch leitenden Elastomer besteht. Weiterhin ist es vorteilhaft, wenn das Verbindungselement einstückig an die Dichtung angeformt ist. Dadurch kann die Dichtung und das Verbindungselement mittels Spritzgießen in einem gemeinsamen Herstellungsverfahren aus dem Elastomer hergestellt werden.

Bevorzugt ist die Dichtung plattenförmig ausgeführt und liegt an einer Stirnseite des Hohlprofils an, indem sie der Deckel daran drängt. Diese plattenförmige Dichtung weist zumindest einen Vorsprung auf, der das Verbindungselement bildet und den Maßstab federnd kontaktiert.

Die Messteilung ist insbesondere zur lichtelektrischen Abtastung ausgelegt und besteht aus in Messrichtung voneinander beabstandet angeordneten Markierungen aus elektrisch leitendem Material, die über eine elektrisch leitende Beschichtung des Maßstabs miteinander elektrisch leitend verbunden sind. Diese Beschichtung reicht bis zu den stirnseitigen Enden des Hohlprofils und bildet das Ableitelement, wo es mit dem Verbindungselement elektrisch verbunden ist.

Durch die Erfindung wird die federnde Eigenschaft des Materials der Dichtung in vorteilhafter Weise zusätzlich zur federnden Kontaktierung des Ableitelementes des Maßstabs genutzt. Indem das Material der Dichtung auch elektrisch leitend ausgeführt wird, ist eine gute elektrische Kontaktierung des Ableitelementes sowie eine elektrische Verbindung mit zumindest einem der Gehäuseteile Hohlprofil und Deckel gewährleistet. Zumindest dieses Gehäuseteil ist dazu ausgebildet, um mit einem Bezugspotential elektrisch kontaktiert zu werden. Das Gehäuseteil besteht daher bevorzugt aus elektrisch leitendem Material, so dass es beim Anbau an eine Maschine mit dieser in elektrischen Kontakt kommt und somit allein durch den Anbau -z.B. Anschrauben- mit dem Bezugspotential verbunden wird.

Die Erfindung wird mit Hilfe eines Ausführungsbeispiels näher erläutert.

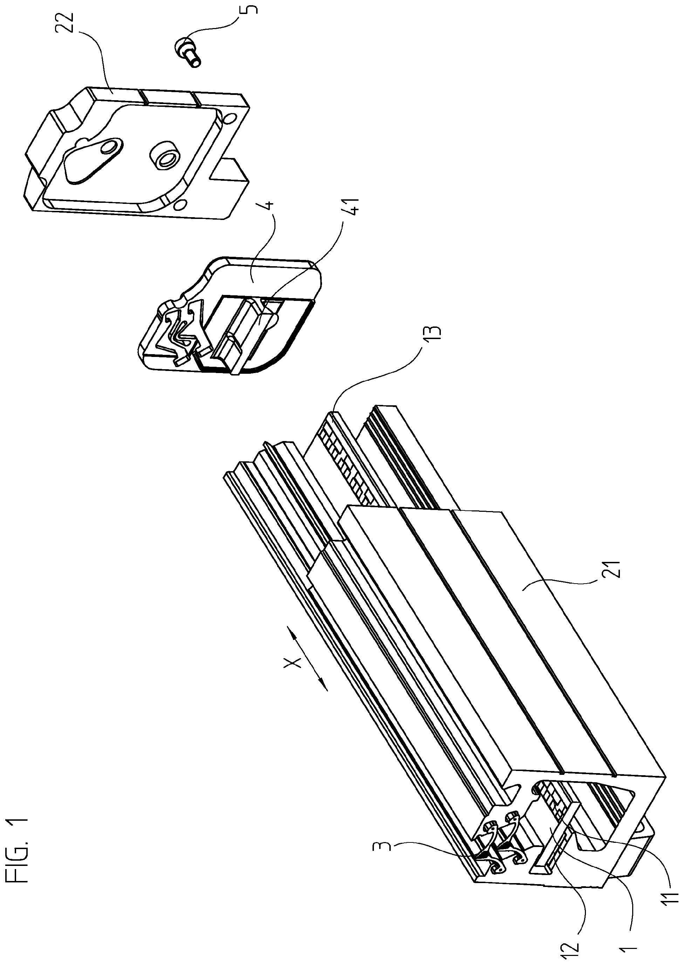

Dabei zeigt
- Figur 1: eine Längenmesseinrichtung vor dem Zusammenbau;
- Figur 2: eine Ansicht der Längenmesseinrichtung gemäß Figur 1 im zusammengebauten Zustand und
- Figur 3: eine Draufsicht auf den Maßstab der Längenmesseinrichtung.

Die Erfindung wird anhand einer lichtelektrischen Längenmesseinrichtung näher erläutert. Diese Längenmesseinrichtung besteht aus den Grundkomponenten Maßstab 1 und Abtasteinheit, die in Messrichtung X relativ zueinander bewegbar sind. Die Abtasteinheit tastet bei der Positionsmessung eine Messteilung 11 des Maßstabs 1 ab und bildet daraus Positionsmesswerte. Da die Erfindung nicht die Abtasteinheit betrifft, ist diese aus Gründen der Übersichtlichkeit in den Figuren nicht dargestellt.

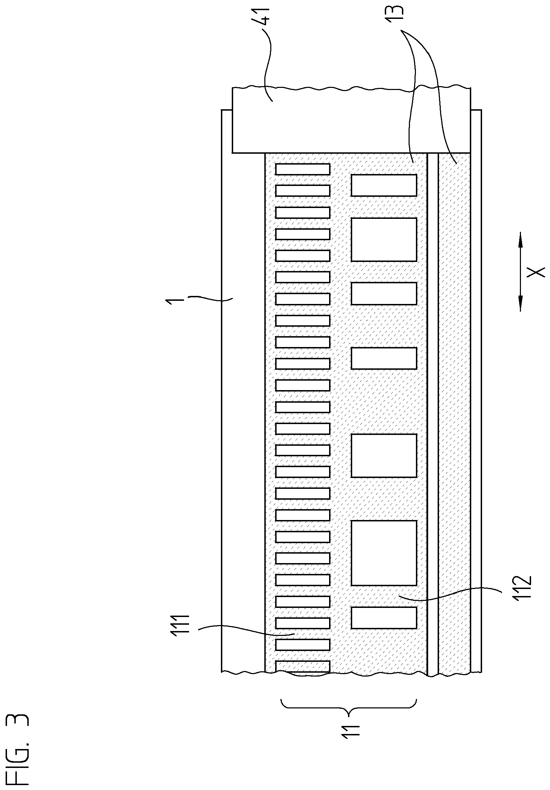

Zur lichtelektrischen Abtastung der Messteilung 11 besteht diese aus opaken Markierungen 111, 112 (Figur 3) in Form einer Beschichtung und der Maßstab 1 aus transparentem Material. Weiterhin besteht der Maßstab 1 aus elektrisch isolierendem Material, insbesondere Glas oder Glaskeramik, auf dem die Messteilung 11 aufgebracht ist.

Der Maßstab 1 ist in einem Gehäuse geschützt untergebracht. Das Gehäuse besteht hierzu aus einem langgestreckten Hohlprofil 21. In Messrichtung X verlaufend weist das Hohlprofil 21 Dichtlippen 3 auf, durch die in bekannter Weise ein Mitnehmer greift, an dem die Abtasteinheit befestigt ist. Die beiden stirnseitigen Enden des Hohlprofils 21 sind jeweils mit einem Deckel 22 abgeschlossen. Zwischen dem Hohlprofil 21 und dem Deckel 22 ist eine Dichtung 4 eingesetzt.

Der Maßstab 1 ist innerhalb des Hohlprofils 21 angeordnet und an diesem mittels einer elastischen Klebstoffschicht 12 befestigt. Dadurch kann sich der Maßstab 1 bei Temperaturänderungen weitgehend unabhängig vom Hohlprofil 21 frei ausdehnen.

Durch verschiedene Einflüsse, wie äußere elektrische Felder oder die Führung der Abtasteinheit am Maßstab 1 mittels Rollen oder Gleitschuhen kann sich die Oberfläche des Maßstabs 1 elektrisch aufladen, wodurch ein Potentialunterschied gegenüber anderen elektrisch leitenden Teilen der Längenmesseinrichtung entsteht, insbesondere gegenüber der in geringem Abstand zum Maßstab 1 geführten Abtasteinheit. Dieser Potentialunterschied kann zu einer impulsartigen Entladung führen. Diese Entladungen werden den elektrischen Abtastsignalen überlagert, was zu Messfehlern führen kann.

Um diese elektrischen Aufladungen von der Oberfläche des Maßstabs 1 über möglichst die gesamte Länge des Maßstabs 1 abzuführen, ist vorzugsweise ein über die Länge des Maßstabs 1 reichendes Ableitelement 13 auf der Oberfläche des Maßstabs 1 aufgebracht. Das Ableitelement 13 ist vorzugsweise eine in Messrichtung X ununterbrochen durchgehende Schicht aus elektrisch leitendem Material auf der Oberfläche des Maßstabs 1. Dabei ist die Messteilung 11 und die das Ableitelement 13 bildende Schicht in einem gemeinsamen Beschichtungsverfahren auf der Oberfläche des Maßstabs 1 aufgebracht. Ist die Messteilung 11 in Form einer elektrisch leitenden Beschichtung ausgeführt, verbindet diese Schicht die einzelnen Markierungen 111, 112 der Messteilung 11 elektrisch miteinander und führt zumindest bis zu einem der beiden stirnseitigen Enden des Maßstabs 1. Alternativ oder zusätzlich - wie in Figur 3 dargestellt - kann ein von der Messteilung 11 getrenntes und beabstandetes Ableitelement 13 in Form eines neben der Messteilung 11 in Messrichtung X verlaufenden Streifens aus elektrisch leitendem Material vorgesehen sein.

Das Ableitelement 13 kann alternativ ein auf die Oberfläche des Maßstabs 1 aufgewalzter oder anderweitig mit der Maßstaboberfläche innig in Kontakt gebrachter Metallstreifen sein.

In nicht gezeigter Weise kann anstelle der Metallschicht auch eine elektrisch transparente Schicht das Ableitelement 13 bilden. Dies hat den Vorteil, dass diese transparente Schicht die Markierungen 111, 112 der Messteilung 11 optisch nicht stören und somit großflächig auch unter oder über diese Markierungen 111, 112 aufgebracht - insbesondere aufgedampft - werden kann.

Ein elektrisch leitendes Verbindungselement 41 kontaktiert nun das Ableitelement 13, also die elektrisch leitende Schicht, und stellt damit eine elektrische Verbindung mit dem Gehäuse, also dem Gehäuseteil Hohlprofil 21 und / oder dem Deckel 22 her. Dieses Gehäuseteil Hohlprofil 21 und / oder Deckel 22 ist elektrisch leitend ausgebildet, besteht insbesondere aus einem elektrisch leitenden Metall wie Aluminium oder Stahl. Da das Gehäuse und die Abtasteinheit im Messbetrieb in der Regel an elektrisch leitende Maschinenelemente einer Maschine angebaut sind, ist im angebauten Zustand das Gehäuse mit dem gleichen Bezugspotential verbunden, wie die Abtasteinheit, so dass keine Potentialunterschiede auftreten können.

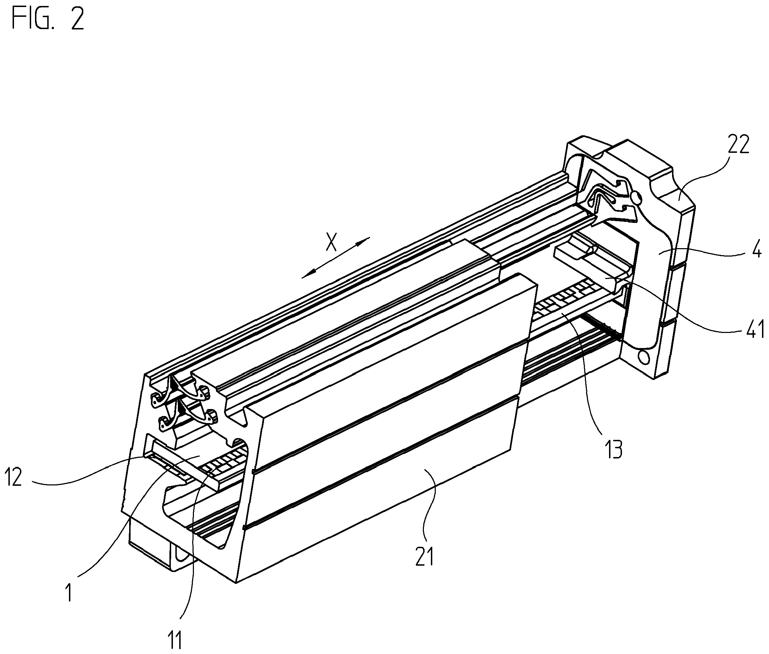

Das elektrisch leitende Verbindungselement 41 ist Bestandteil einer Dichtung 4, welche zwischen dem Hohlprofil 21 und dem Deckel 22 dichtend eingesetzt ist. Die Dichtung 4 dichtet das Hohlprofil 21 endseitig ab, indem diese zwischen der Stirnseite des Hohlprofils 21 und dem Deckel 22 angeordnet ist. Der Deckel 22 ist über Schrauben 5 am Hohlprofil 21 befestigt und drängt die Dichtung 4 an die Stirnseite des Hohlprofils 21. Die Dichtung 4 ist hierzu plattenförmig ausgeführt, wobei ein Bereich davon stirnseitig am Hohlprofil 21 anliegt. Ein weiterer Bereich der Dichtung 4 weist einen Vorsprung auf, der das Verbindungselement 41 zum federnden Kontaktieren des Ableitelements 13 des Maßstabs 1 bildet. Wie insbesondere in Figur 2 ersichtlich ist, kommt dieser Vorsprung bei der Montage zur Anlage an das als elektrisch leitende Schicht ausgebildete Ableitelement 13. Durch die elastisch federnde Ausgestaltung ist eine sichere mechanische Kontaktierung und somit auch elektrische Kontaktierung gewährleistet.

Als Material für die Dichtung 4 und das daran einstückig ausgebildete, insbesondere durch Anspritzen angeformte, Verbindungselement 41 eignet sich besonders ein elektrisch leitendes Elastomer, wie z.B. NBR, EPDM oder ACM. Wobei das Elastomer durch elektrisch leitende Füllstoffe, insbesondere auf der Basis von Kohlenstoff, hervorragende elektrische Leitfähigkeit aufweist.

In Figur 3 ist eine Draufsicht auf den Maßstab 1 vergrößert dargestellt. Die Messteilung 11 besteht in diesem Fall aus einer Inkrementalspur mit einer Folge von gleichbeabstandeten Markierungen 111 und einer daneben angeordneten Absolutspur mit weiteren Markierungen 112, die unregelmäßig angeordnet sind. Die Markierungen 111 und 112 bestehen aus einer Schicht aus elektrisch leitendem Material, z.B. Chrom und sind mittels des als elektrisch leitende Schicht ausgebildeten Ableitelementes 13 miteinander elektrisch verbunden. Alternativ oder zusätzlich kann als Ableitelement 13 eine neben der Messteilung 11 und von dieser beabstandet angeordnete Schicht in Form eines Streifens dienen, wie in Figur 3 dargestellt. Das Verbindungselement 41 kontaktiert das Ableitelement 13, also zumindest eine in Messrichtung X sich erstreckende elektrisch leitende Schicht und stellt somit eine elektrisch leitende Verbindung mit dem Bezugspotential her.

Wie Figur 3 zeigt, wird mit dem erfindungsgemäß ausgebildeten Verbindungselement 41 die elektrische Kontaktierung einer relativ breiten Messteilung 11 möglich. Das Elastomer passt sich optimal an den Maßstab 1 an und gleicht Toleranzen aus, so dass eine sichere Kontaktierung gewährleistet ist. Das Elastomer hat weiterhin die Eigenschaft, den Kontakt auch bei Vibrationen aufrechtzuerhalten, ohne dass ein Abrieb des als Schicht ausgeführten Ableitelementes 13 erfolgt.

## Patentansprüche

1. Längenmesseinrichtung mit
einem Gehäuse, bestehend aus einem langgestreckten Hohlprofil (21) und zumindest einem stirnseitig daran angeordneten Deckel (22); einem Maßstab (1) aus elektrisch nicht leitendem Material, welcher innerhalb des Gehäuses angeordnet ist und welcher eine Messteilung (11) aufweist, welche von einer in Messrichtung (X) relativ zum Gehäuse bewegbaren Abtasteinrichtung abtastbar ist;
einem auf dem Maßstab (1) aufgebrachten und in Messrichtung (X) verlaufenden Ableitelement (13) aus elektrisch leitendem Material; einem elektrisch leitenden Verbindungselement (41), das eine elektrische Verbindung zwischen dem Ableitelement (13) und zumindest einem der Gehäuseteile Hohlprofil (21) und Deckel (22) herstellt, **dadurch gekennzeichnet, dass**
das elektrisch leitende Verbindungselement (41) Bestandteil einer Dichtung (4) ist, welche zwischen dem Hohlprofil (21) und dem Deckel (22) dichtend angeordnet ist.

2. Längenmesseinrichtung nach Anspruch 1, **dadurch gekennzeichnet, dass** das Verbindungselement (41) an die Dichtung (4) angeformt ist und das Verbindungselement (41) und die Dichtung (4) gemeinsam aus einem elektrisch leitenden Elastomer bestehen.

3. Längenmesseinrichtung nach einem der vorhergehenden Ansprüche, **dadurch gekennzeichnet, dass** die Dichtung (4) plattenförmig ausgeführt ist, und an einer Stirnseite des Hohlprofils (21) anliegt und weiterhin zumindest einen Vorsprung aufweist, der das Verbindungselement (41) bildet und das Ableitelement (13) federnd kontaktiert.

4. Längenmesseinrichtung nach einem der vorhergehenden Ansprüche, **dadurch gekennzeichnet, dass** das Ableitelement (13) eine auf dem Maßstab (1) aufgebrachte elektrisch leitende Schicht ist.

5. Längenmesseinrichtung nach einem der vorhergehenden Ansprüche, **dadurch gekennzeichnet, dass** die Messteilung (11) aus in Messrichtung (X) voneinander beabstandet angeordneten Markierungen (111, 112) aus elektrisch leitendem Material besteht, die über eine elektrisch leitende Schicht miteinander elektrisch leitend verbunden sind, die das Ableitelement (13) bildet, wobei das Verbindungselement (41) diese Schicht kontaktiert.

6. Längenmesseinrichtung nach einem der vorhergehenden Ansprüche, **dadurch gekennzeichnet, dass** der Maßstab (1) aus einem transparenten Material besteht auf dem die Messteilung (11) in Form von opaken Markierungen (111, 112) aufgebracht ist.

## Claims

1. Length measuring device having
a housing, comprising an elongated hollow profile (21) and at least one cover (22) arranged thereon at the end side;
a scale (1) of electrically non-conductive material, which is arranged within the housing and which has a measuring graduation (11) which can be scanned by a scanning device movable relative to the housing in a measuring direction (X);
a shunt (13) of electrically conductive material applied to the scale (1) and extending in the measuring direction (X);
an electrically conductive connecting element (41), which produces an electric connection between the shunt (13) and at least one of the housing parts hollow profile (21) and cover (22), **characterized in that**
the electrically conductive connecting element (41) is a constituent part of a seal (4), which is arranged in a sealing manner between the hollow profile (21) and the cover (22).

2. Length measuring device according to Claim 1, **characterized in that** the connecting element (41) is integrally moulded on the seal (4), and the connecting element (41) and the seal (4) are jointly composed of an electrically conductive elastomer.

3. Length measuring device according to one of the preceding claims, **characterized in that** the seal (4) is of plate-like design and rests on an end side of the hollow profile (21), and in addition has at least one projection, which forms the connecting element (41) and contacts the shunt (13) in a sprung manner.

4. Length measuring device according to one of the preceding claims, **characterized in that** the shunt (13) is an electrically conductive layer applied to the scale (1).

5. Length measuring device according to one of the preceding claims, **characterized in that** the measuring graduation (11) consists of markings (111, 112) of electrically conductive material which are arranged at a distance from one another in the measuring direction (X) and are electrically conductively connected to one another via an electrically conductive layer which forms the shunt (13), the connecting element (41) making contact with this layer.

6. Length measuring device according to one of the preceding claims, **characterized in that** the scale (1) consists of a transparent material, to which the measuring graduation (11) is applied in the form of opaque markings (111, 112).

## Revendications

1. Dispositif de mesure de longueur présentant
un boîtier constitué d'un profilé creux (21) allongé et d'au moins un couvercle (22) qui y est placé frontalement,
une échelle de mesure (1) en matériau électriquement non conducteur disposée à l'intérieur du boîtier et présentant une division de mesure (11) qui peut être palpée par un dispositif de palpage apte à être déplacé par rapport au boîtier dans une direction de mesure (X),
un élément de sortie (13) en matériau électriquement conducteur appliqué sur l'échelle de mesure (1) et s'étendant dans la direction de mesure (X),
un élément électriquement conducteur de liaison (41) qui établit une liaison électrique entre l'élément de sortie (13) et au moins l'une des parties du boîtier, à savoir le profilé creux (21) ou la couvercle (22),
**caractérisé en ce que**
l'élément électriquement conducteur de liaison (41) fait partie d'un joint d'étanchéité (4) disposé de manière à assurer l'étanchéité entre le profilé creux (21) et le couvercle (22).

2. Dispositif de mesure de longueur selon la revendication 1, **caractérisé en ce que** l'élément de liaison (41) est formé sur le joint d'étanchéité (4) et **en ce que** l'élément de liaison (41) et le joint d'étanchéité (4) sont constitués conjointement d'un élastomère électriquement conducteur.

3. Dispositif de mesure de longueur selon l'une des revendications précédentes, **caractérisé en ce que** le joint d'étanchéité (4) est réalisé sous la forme d'une plaque et repose contre un côté frontal du profilé creux (21) et présente en outre au moins une saillie qui forme l'élément de liaison (41) et qui assure un contact élastique avec l'élément de sortie (13).

4. Dispositif de mesure de longueur selon l'une des revendications précédentes, **caractérisé en ce que** l'élément de sortie (13) est une couche électriquement conductrice appliquée sur l'échelle de mesure (1).

5. Dispositif de mesure de longueur selon l'une des revendications précédentes, **caractérisé en ce que** la division de mesure (11) est constituée de repères (111, 112) en matériau électriquement conducteur disposés à distance mutuelle dans la direction de mesure (x), reliés les uns aux autres de manière électriquement conductrice par l'intermédiaire d'une couche électriquement conductrice qui forme l'élément de sortie (13), l'élément de liaison (41) étant en contact avec cette couche.

6. Dispositif de mesure de longueur selon l'une des revendications précédentes, **caractérisé en ce que** l'échelle de mesure (1) est constituée d'un matériau transparent sur lequel la division de mesure (11) est appliquée sous la forme de repères opaques (111, 112).
